Europäisches Patentamt

European Patent Office

Office européen des brevets

(19)

(11) Veröffentlichungsnummer : **0 327 822 B1**

# EUROPÄISCHE PATENTSCHRIFT

(12)

(45) Veröffentlichungstag der Patentschrift :
27.02.91 Patentblatt 91/09

(51) Int. Cl.⁵ : **A47J 31/057, A47J 31/06**

(21) Anmeldenummer : 89100511.8

(22) Anmeldetag : 13.01.89

(54) Filtereinheit zum Zubereiten von Tee.

(30) Priorität : 08.02.88 DE 3803728

(43) Veröffentlichungstag der Anmeldung :
16.08.89 Patentblatt 89/33

(45) Bekanntmachung des Hinweises auf die
Patenterteilung :
27.02.91 Patentblatt 91/09

(84) Benannte Vertragsstaaten :
AT BE CH DE FR GB LI NL SE

(56) Entgegenhaltungen :
EP-A- 0 079 235
EP-A- 0 163 896

(56) Entgegenhaltungen :
EP-A- 0 227 200
EP-A- 0 249 700
DE-A- 2 829 775
DE-U- 8 702 616
FR-A- 1 477 700
US-A- 3 793 935

(73) Patentinhaber : Braun Aktiengesellschaft
Rüsselsheimer Strasse 22
D-6000 Frankfurt/Main (DE)

(72) Erfinder : Oppermann, Günter
Kirchbornstrasse 37
D-6057 Dietzenbach (DE)
Erfinder : Wunder, Dieter
Kirchstrasse 9
D-6361 Reichelsheim (DE)

**Beschreibung**

Die Erfindung betrifft eine Filtereinheit zum Zubereiten von Tee nach dem Oberbegriff des Patentanspruchs 1.

Aus der EP-A3 0 079 235 ist insbesondere aus den Fign. 3 und 4 bereits eine auch zum Zubereiten von Tee verwendbare derartige Filtereinheit bekannt, die am Gehäuse einer Brühgetränkezubereitungsmaschine abnehmbar und unterhalb einer heißes Wasser abgebenden ersten Abgabeöffnung angeordnet ist und die an ihrer Mantelfläche einen Überlaufkanal auweist, der an seinem Eingang eine Öffnung und einen Endabschnitt aufweist. In den Endabschnitt des Überlaufkanals gelangtes heißes Wasser kann über eine dort ausgebildete zweite Abgabeöffnung in einen unter der Filtereinheit angeordneten Auffangbehälter abfließen. Im Bereich des Bodens der bekannten Filtereinheit befindet sich ein vom Endabschnitt des Überlaufkanals umgebenes Ventil, das vom Benutzer der Brühgetränkezubereitungsmaschine von außen auf elektrischem Wege gesteuert wird und mit dem das Brühgetränk über einen Auslaß aus der Filtereinheit in den Endabschnitt des Überlaufkanals abgelassen werden kann, aus dem es dann schließlich wiederum durch die zweite Abgabeöffnung in den Auffangbehälter abfließen kann.

Die bekannte Filtereinheit weist neben dem an ihrem Boden angeordneten Ventil ein weiteres vor der ersten Abgabeöffnung liegendes zweites Ventil auf, bei dessen Öffnung das heiße Wasser nicht in die Filtereinheit, sondern direkt über den Überlaufkanal in den Auffangbehälter abfließt. Durch die über einen Mikroprozessor erfolgende Steuerung der beiden Ventile kann sowohl Kaffee für kurze, mittlere oder auch längere Zeit aufgebrüht werden, als auch der aufgebrühte Kaffee dadurch verdünnt werden, daß heißes Wasser direkt über den Überlaufkanal in den Auffangbehälter geführt wird, ohne vorher durch das in der Filtereinheit sich befindliches Kaffeemehl geflossen zu sein.

Die bekannte Filtereinheit hat den Nachteil, daß sie für die Zubereitung von Tee weniger geeignet ist, da es dabei selten darauf ankommt, Tee zu verdünnen, der sich bereits im Auffangbehälter befindet. Bei der Zubereitung von Tee kommt es vielmehr darauf an, die Teeblätter in der Filtereinheit eine bestimmte Zeit "ziehen" zu lassen und ggfs. diejenigen Mengen an heißem Wasser abzuführen, welche – sofern das am Boden der Filtereinheit angeordnete Ventil geschlossen ist – zu einem Überlaufen der Filtereinheit führen würden.

Weiterhin weist die bekannte Filtereinheit den Nachteil auf, daß die beiden in ihr eingebauten, auf elektrischem Wege betätigbaren Ventile über eine elektronische Schaltung relativ aufwendig gesteuert werden und damit die Filtereinheit damit nur ziemlich teuer herzustellen ist.

Ein weiterer wesentlicher Nachteil der bekannten Filtereinheit besteht darin, daß zur Montage des an ihrem Boden angeordneten Ventils der Überlaufkanal selbst abnehmbar ausgeführt sein muß und daß die elektrischen Mittel zur Betätigung des Ventils elektrisch mit der elektronischen Schaltung verbunden werden müssen, was den Montageaufwand vergrößert und damit die Herstellung der Filtereinheit weiter verteuert.

Es war daher Aufgabe der Erfindung, eine speziell zur Zubereitung von Tee geeignete Filtereinrichtung nach dem Oberbegriff des Patentanspruchs 1 zu schaffen, bei der das an ihrem Boden angeordnete Ventil auf einfache Weise montiert und bedient werden kann und die darüber hinaus auch preiswert hergestellt werden kann.

Die Lösung dieser Aufgabe erfolgt für eine Filtereinrichtung nach dem Oberbegriff des Patentanspruchs 1 durch die in dessen kennzeichnendem Teil aufgeführten Merkmale.

Dadurch, daß am Endabschnitt des Überlaufkanals eine quer zum Auslaß verlaufende Öffnung vorgesehen ist, kann sowohl das Ventil selbst als auch die zu seiner Betätigung dienende Verstelleinheit in die vorteilhafterweise mittels eines Spritzgußverfahrens hergestellte Filtereinheit von außen in einem Arbeitsgang und daher einfach und billig in den Überlaufkanal eingebracht werden. Dadurch, daß an der Verstelleinheit bereits auch Dichtelemente ausgebildet sind, wird im selben Arbeitsgang gleichzeitig auch der Überlaufkanal nach außen hin abgedichtet.

Eine erste vorteilhafte Ausgestaltung der Erfindung (vgl. Anspruch 2) besteht darin, daß das Ventil einen zum Verschließen des Auslasses geeigneten Ventilkörper aufweist, der an einem sich an der Filtereinheit abstützenden Federelement befestigt ist, welches zum Schließen und Öffnen des Ventils von einem an der Verstelleinheit ausgebildeten Exzenter betätigbar ist. Betätigt wird der Exzenter dabei über eine radial nach außen verlaufende Stange, die mit einem an der Mantelfläche der Filtereinheit gelagerten Betätigungsknopf verbunden ist. Mit dieser Anordnung werden zusätzliche Bauelemente vermieden und daher die Montage besonders einfach und preiswert.

Durch eine Ausgestaltung der Erfindung gemäß Anspruch 3, ergibt sich der Vorteil, daß die zweite Abgabeöffnung nicht von Teeblättern verstopft werden kann und daß zur Beendigung des "Ziehvorgang" der aufgebrühte Tee nicht unbedingt aus der Filtereinheit abgelassen werden muß, sondern auch der die Teeblätter enthaltende Behälter aus der Filtereinheit herausgenommen werden kann. Durch diese Anordnung kann also bei der Herstellung von geringen Mengen Tee auf den bis zu 12 Tassen aufgebrühten Tee aufnehmenden, im Volumen also wesentlich größeren Auffangbehälter verzichtet werden. Die Direktbefüllung einer Teetasse verhindert darüber hinaus eine allzu starke Temperaturabsenkung des aufgebrühten Tees, die zwangsläufig dann eintritt, wenn man den aufgebrühten Tee zuerst in einem Auffangbehälter zwischenlagert. Damit der siebartig ausgebildete Behälter aus der Filtereinheit herausgenommen werden kann, ohne das die Gefahr besteht, daß sich der Benutzer der Brühgetränkezubereitungsmaschine die Hand verbrüht, ist an der Öffnung des Überlaufkanals eine nach oben offene Aussparung vorgesehen, durch die ein am Behälter nach außen hervorstehender Handgriff durchtritt.

Stimmt man gemäß Anspruch 4 die Dicke des Handgriffs so auf die Tiefe der Aussparung ab, daß die Kontur an der Oberseite der Filtereinheit erhalten bleibt, ergibt sich der Vorteil, daß die Einfüllöffnung der Filtereinheit weiterhin von einem am Gehäuse der Brühgetränkezubereitungsmaschine ausgebildeten Deckel, der die erste Abgabeöffnung trägt, ausreichend dicht verschlossen werden kann, wodurch Aroma- und Temperaturverluste vermieden werden.

Damit während des Überlaufvorganges evtl. auf der Oberfläche des aufgebrühten Tees schwimmende Teeblätter nicht in den Überlaufkanal eintreten, ist es bei einer Weiterbildung der Erfindung gemäß Anspruch 5 vorgesehen, daß die Aussparung einen oder mehrere, im wesentlichen längst zum Überlaufkanal verlaufende Schlitze aufweist.

Ein Ausführungsbeispiel der Erfindung ist in der Zeichnung dargestellt und wird im folgenden näher beschrieben. Es zeigen :

Fig. 1 eine schematisch dargestellte Brühgetränkezubereitungsmaschine ohne Darstellung des die einzelnen Teile miteinander verbindenden Gehäuses,

Fig. 2 Teilansicht auf eine perspektisch dargestellte Brühgetränkezubereitungsmaschine, bei der die Filtereinheit aus dem Gehäuse herausgeschwenkt ist,

Fig. 3 Längsschnitt durch eine Filtereinheit nach der Erfindung, wobei in die Filtereinheit eine Tasse eingesetzt ist,

Fig. 4 Längsschnitt gemäß der Schnittführung IV-IV in Fig. 3, wobei jedoch die in Fig. 3 in die Filtereinheit eingesetzte Tasse nicht dargestellt ist,

Fig. 5 Draufsicht auf die Filtereinheit in Richtung X gemäß Fig. 3,

Fig. 6 Seitenansicht auf die Filtereinheit in Richtung Y gemäß Fig. 3 und

Fig. 7 gleiche Darstellung der Filtereinheit gemäß Fig. 3, jedoch mit einem in die Filtereinheit eingesetzten, am Boden siebartig durchlöcherten Behälter.

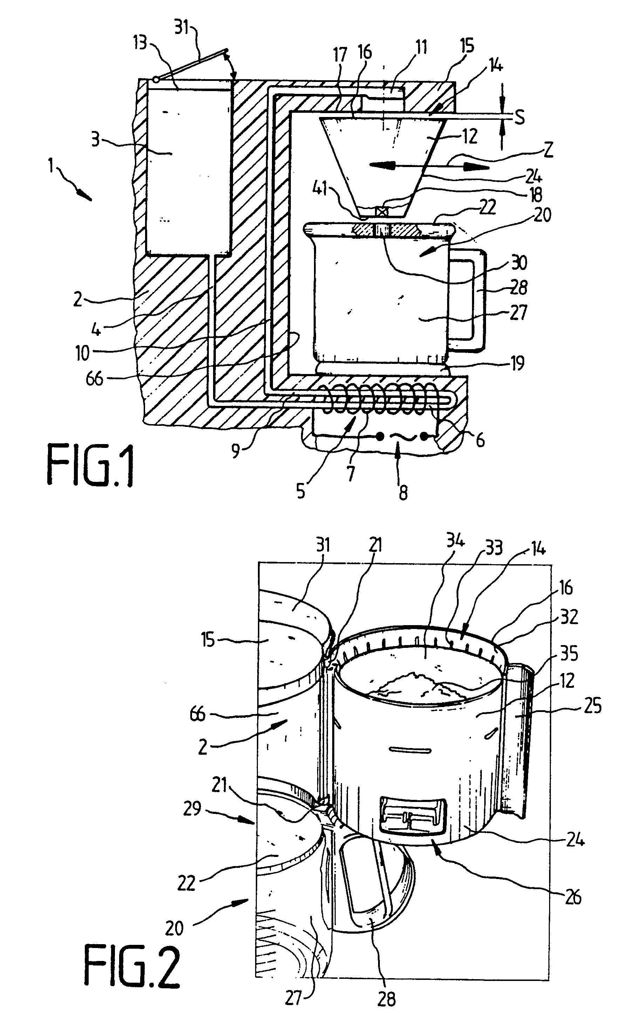

Zur Vermeidung von Wiederholungen wurden in den Figuren 1 bis 7 für entsprechend gleiche Bauteile bzw. Wandungen gleiche Bezugszeichen verwendet.

In Fig. 1 ist schematisch eine Getränkezubereitungsmaschine 1, insbesondere Kaffeemaschine, dargestellt. Diese Kaffeemaschine 1 weist einen in einem Gehäuse 2 integrierten Tank 3 auf, der als Wasserreservoir dient und der an seinem in der Zeichnung unteren Ende an eine Wasserleitung 4 angeschlossen ist, die die Verbindung zu einem unterhalb des Tanks 3 im Gehäuse 2 angeordneten, als Wärmepumpe ausgebildeten Durchlauferhitzer 5 herstellt. Der Durchlauferhitzer 5 besteht üblicherweise aus einem mit der Wasserleitung 4 verbundenen Wasserrohr 6, das von einem mit einem Heizdraht 7 versehenen Heizelement im Betrieb mit Wärme versorgt wird. Der Heizdraht 7 ist zum Aufheizen mit einer elektrischen Energiequelle 8 verbindbar. Die Ausgangsleitung 9 ist mit einer Heißwasserleitung 10 verbunden, die mittels ihrer Abgabeöffnung 11 oberhalb einer als Kaffeefilter ausgebildeten Filtereinheit 12 endet. Die Abgabeöffnung 11 ist etwa auf der Höhe der Einlaßöffnung 13 ausgebildet, damit bei vollem Tank 3 nicht bereits über die Abgabeöffnung 11 Wasser in den Filter 12 einfließen kann, wenn die Kaffeemaschine 1 noch garnicht eingeschaltet ist.

Im eingeschwenkten Zustand der Filtereinheit 12, d.h., die Filtereinheit 12 befindet sich in ihrer Bereitschaftsstellung, ist ihre in Fig. 1 nach oben zur Abgabeöffnung 11 offene und darunter angeordnete Einfüllöffnung 11 von einem am Gehäuse 2 deckelartigen Vorsprung 15 so eingelassen, daß nur ein sehr geringer Spalt s zwischen der Oberkante 16 des Kaffeefilters 12 und der Unterkante 17 des im wesentlichen der Außenkontur des Kaffeefilters 12 angepaßten, also kreisförmigen Vorsprungs 15 entspricht. Der Kaffeefilter 12 weist an seinem in der Zeichnung unteren Ende ein Ventil 18 auf, das erst dann selbsttätig öffnet, wenn der Kaffeefilter 12 ordnungsgemäß im Gehäuse 2 eingeschwenkt ist und gleichzeitig die unterhalb des Kaffeefilters 12 auf einer Warmhalteplatte 19 abgestellte, als Auffangbehälter für das Brühgetränk dienende Kanne 20 ihre ordnungsgemäße Position erreicht hat. Zur Erwärmung der Warmhalteplatte 19 dient gleichzeitig der Durchlauferhitzer 5, der unterhalb der Warmhalteplatte 19 angeordnet ist und der über in Fig. 1 nicht dargestellte, thermische Regelelemente steuerbar ist.

In Fig. 2 ist nochmals die in Fig. 1 dargestellte, bereits millionenfach verkaufte Kaffeemaschine 1 teilsweise in perspektivischer Form dargestellt, wie sie auch aus der Programm-Übersicht, Ausgabe Herbst 1987, Seite 31 oben, der Firma Braun Aktiengesellschaft in Kronberg/Ts. ersichtlich ist. In dieser Darstellung ist zum besseren Verständnis die ausgeschwenkte Stellung des Kaffeefilters 12 aus dem Gehäuse 2 dargestellt. Der Kaffeefilter 12 weist zum Herausschwenken an seinem in Fig. 2 linken Ende ein mit dem Gehäuse 2 bildendes Drehgelenk 21 auf, das dem Kaffeefilter 12 eine im wesentlichen parallele Bewegung zur Oberseite 22 der Kanne 20, wie dies auch die Richtungen des Pfeiles Z andeuten, verleiht.

Zur besseren Handhabung des Kaffeefilters 12 ist an seiner äußeren Mantelfläche 24 ein Handgriff 25 angeformt. Am Boden des Kaffeefilters 12 ist in Fig. 2 ein Hebelgestänge 26 angeordnet, das zur Steuerung des in Fig. 1 angedeuteten Ventils 18 dient. Unterhalb des Kaffeefilters 12 befindet sich in Fig. 2 im Gehäuse 2 der Auffangbehälter 20, der aus einem Glaskrug 27 mit einem an seiner Mantelfläche angeklebten Handgriff 28 und mit einem die Einfüllöffnung verschließenden Deckel 29 besteht. Der zylindrische Deckel 29 ist in seiner Mitte mit einer Bohrung 30 ausgestattet, die in Betriebsstellung der Getränkezubereitungsmaschine 1, wie dies Fig. 1 zeigt, senkrecht unterhalb des Ventils 18 angeordnet ist, damit ein ungehinderter Fluß des Brühgetränks von der Filtereinheit 12 zum Auffangbehälter 20 erfolgen kann.

In Fig. 1 und 2 ist noch ein den Tank 3 verschließender, nach oben zu öffnender Tankdeckel 31 erkennbar. Wie weiterhin aus Fig. 2 ersichtlich ist, sind an der in der Zeichnung nach unten V-förmig verlaufenden Innenfläche 32 am Kaffeefilter 12 längsverlaufende Rippen 33 angeformt, die den Abfluß des Kaffees durch den Kaffeefilter 34 zur Innenfläche 32 hin besser ermöglichen. Der in Fig. 2 dargestellte Kaffeefilter 12 ist für den nachträglichen Brühvorgang mit Kaffeemehl 35 gefüllt.

Anstelle des in Fig. 2 dargestellten Kaffeefilters 12 ist nun nach der Erfindung auch ein Teefilter 36 einsetzbar, der die gleichen Anschlußmaße wie der Kaffeefilter 12 aufweist, damit er genauso problemlos in die bereits vorhandene Kaffeemaschine 1 einsetzbar und vollständig in ihr integriert ist.

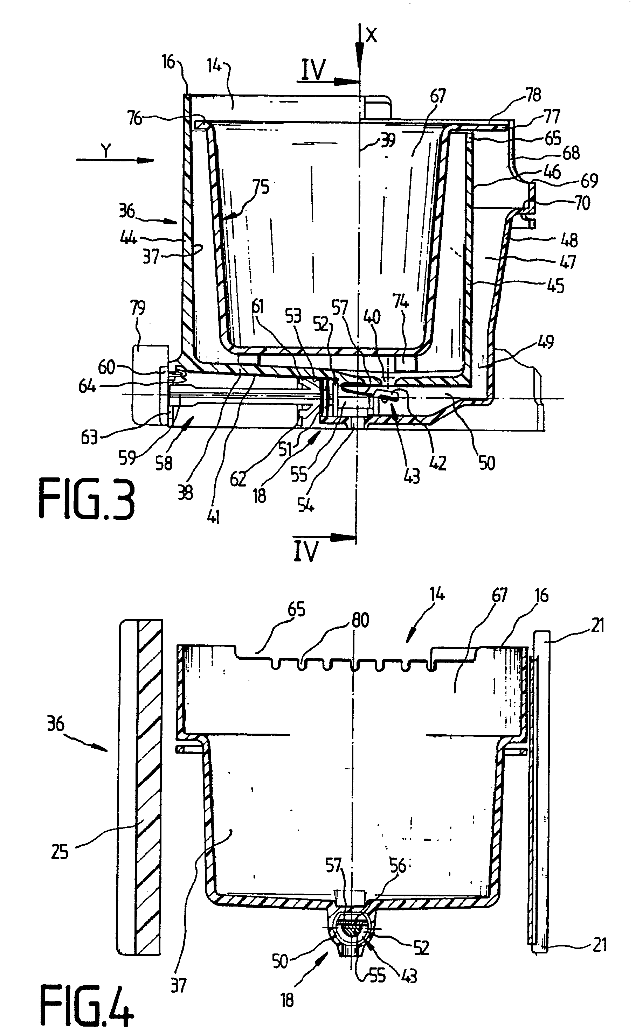

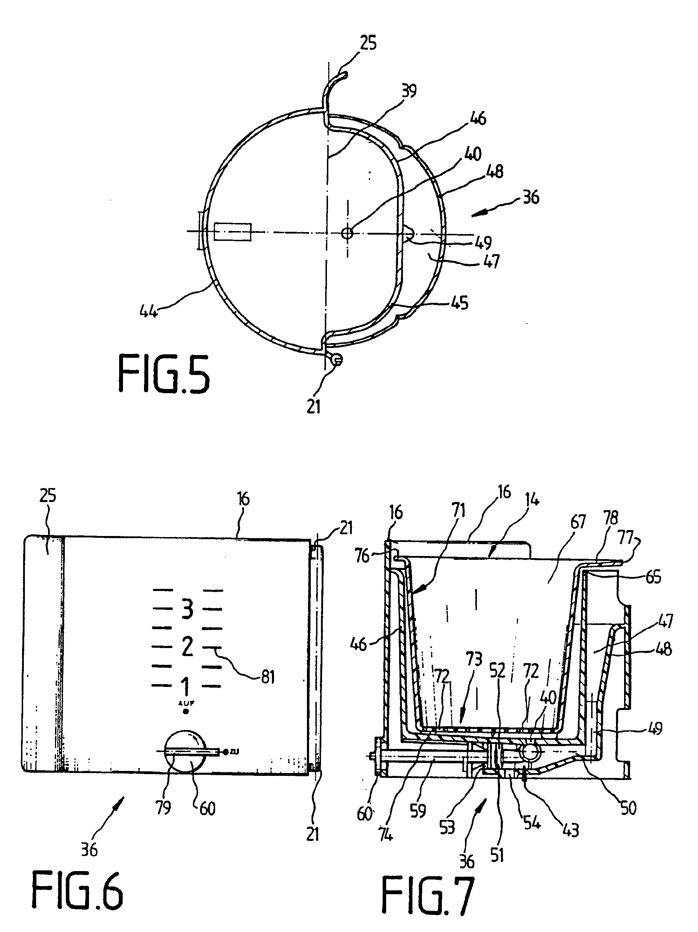

Der in den Fig. 3 bis 7 dargestellte Teefilter 36 besteht im wesentlichen aus einem zylindrischen, nach oben über die Einlaßöffnung 14 offenen Behälter 37, der im wesentlichen zylindrisch verläuft und der nach unten durch einen horizontal verlaufenden Boden 38 begrenzt ist. Der Boden 38 wird von einem Auslaß 40 durchdrungen, der mit einem an der Unterseite 41 des Bodens 38 befestigten Ventilkörper 42 die Ventilanordnung 43 bildet. Der Auslaß 40 ist in den Fig. 3 und 5 rechts von der Mittellinie 39 des Behälters 37 am Boden 38 angeordnet. Die Innenfläche des Bodens 38 verläuft zum Auslaß 40 kegelförmig, damit bei geöffneter Ventilanordnung 43 die im Behälter 37 befindliche Brühgetränkemenge vollständig abfließen kann. Wie in Fig. 5 verdeutlicht, ist der von der Mittellinie 39 aus gesehene Abschnitt 44 des Behälters 37 zylinderförmig und der rechts von der Mittellinie 39 verlaufende Abschnitt 45 des Behälters 37 im wesentlichen als ein liegendes, nach links offenes U ausgebildet.

In den Fig. 3, 5 und 7 ist an der radial äußeren Mantelfläche 46 ein von oben nach unten verlaufender Überlaufkanal 47 angeformt, der in der Draufsicht gemäß Fig. 5 halbmondförmig ausgebildet ist und dessen radial äußere Wandung 48 mit dem linken Abschnitt 44 einen kreisringförmigen Querschnitt beschreibt. Der Überlaufkanal 47 verjüngt sich gemäß Fig. 3 von oben nach unten trichterförmig und läuft in den Kanalabschnitt 49 ein, an den sich unterhalb des Bodens 38 ein parallel zum Boden 38 verlaufender, zweiter Kanalabschnitt 50 anschließt, in den der Auslaß 40 einmündet. Der zweite Kanalabschnitt 50 ist von einem mit Radialdichtungen 51 versehenen Kolben 52 dichtend an seiner Öffnung 53 verschlossen. Links vom Kolben 52 schließt sich an die untere Kanalwandung des zweiten Kanalabschnitts 50 eine Abgabeöffnung 54 an, die die eigentliche Auslaßöffnung gegenüber der an den Deckel 29 ausgebildeten Bohrung 30 des Auffangbehälters 20 bildet.

Die Abgabeöffnung 54 liegt auf der Mittellinie 39, während der Auslaß 40 rechts von der Mittellinie 39 am Boden 38 ausgebildet ist. An den Kolben 52 schließt sich in Fig. 3 nach rechts ein im Querschnitt halbkreisförmiger Zapfen 55 an, an dessen Oberseite 56 ein vorzugsweise aus Metall hergestelltes, blechstreifenförmig ausgebildetes Federelement 57 federnd anliegt. In Höhe der Mittellinie der Auslaßöffnung 40 ist an diesem Federelement 57 eine Bohrung 58 angeordnet, in die ein dem Auslaß 40 gegenüberliegender Ventilkörper 42 eingeknöpft ist, der zum besseren Abdichten des Auslasses 40 aus gummielastischen Werkstoff hergestellt ist. Der Zapfen 55 bildet gegenüber dem mit dem Ventilkörper 42 verbundenen Federelement 57 die Exzenterbetätigung. Der Zapfen 55 liegt so in dem als Kammer ausgebildeten, zweiten Kanalabschnitt 50, daß noch ein ausreichender Durchlaß von dem Auslaß 40 zu der Abgabeöffnung 54 besteht.

Am freien Ende links vom zweiten Kanalabschnitt 50 schließt sich an den Kolben 52 die Verstelleinheit 58 an, die aus einer Stange 59 und einem sich am radial äußeren Ende an die Stange 59 anschließenden Betätigungsknopf 60, wie dies aus Fig. 3 deutlich hervorgeht, zusammensetzt. Die Verstelleinheit 58 mitsamt dem Kolben 52 und dem Zapfen 55 sind über an der Stange 59 ausgebildete Haltearme 61 in einer mit dem zweiten Kanalabschnitt 50 fluchtenden Bohrung 62 eingehängt. Eine am radial äußeren Ende am Gehäuse 2 ausgebildete, ebenfalls mit der Bohrung 62 fluchtende Bohrung 63 dient mittels nicht näher beschriebener Sperrelemente 64 zur axialen Sicherung der mit der Stange 59 fest verbundenen Teile, wie Betätigungsknopf 60, Kolben 52 und Zapfen 55. Das Betätigungselement 60 wird erst nach Montage der Stange 59 von außen auf diese reibschlüssig aufgesetzt. In den Fig. 3, 5 und 7 ist auf der rechten Seite and der Oberkante 16 der Mantelfläche 46 des Behälters 37 eine Aussparung bzw. Öffnung 65 vorgesehen, die, wie dies Fig. 4 zeigt, mit in parallel zur Mittellinie 39 verlaufende, am Umfang in gleichen Abstand verteilte Schlitze 80 aufweist. Die Aussparung 65 ist auf der Seite des Teefilters 36 angeordnet, die beim Einschwenken des Teefilters 36 in die Brühgetränkezubereitungsmaschine 1 und der Innenwan-

dung 66 (siehe Fig. 1 und 2) anliegt bzw. ihr in geringem Abstand gegenüberliegt, so daß also in der Bereitschaftsstellung diese Aussparung 65 von außen her nicht erkennbar ist, weil der der Aussparung 65 gegenüberliegende Rand diese verdeckt.

Der Füllraum 67 des Behälters 37 is über diese Aussparung 65 mit dem Überlaufkanal 47 verbunden. An der Wandung 48 des Überlaufkanals 47 ist im Bereich der Aussparung 65 ein Ausschnitt 68 vorgesehen, dessen gemäß Fig. 3 und 4 unteres Ende durch die Kante 69 dargestellt ist. Geringfügig unterhalb der Kante 69 erfährt die Wandung 48 eine Einschnürung 70, an der die nach unten kegelige Verjüngung des Überlaufkanals 47 beginnt.

In Fig. 7 ist in den Füllraum 67 des Behälters 37 ein weiterer Behälter 71 eingesetzt, der an seinem Boden 73 zahlreiche Durchgangslöcher 72 aufweist, die den Boden 73 siebartig gestalten. Unterhalb des Bodens 73 sind an diesem Füßchen 74 angeformt (siehe hier auch Fig. 3), die einen Abstand des Behälters 71 zum Boden 38 des Behälters 37 des Teefilters 36 herstellen. Hierdurch kann das aus dem Behälter 71, der in bekannter Weise ein Teesieb darstellt, herausfließende Brühgetränk ungehindert zum Auslaß 40 gelangen.

In Fig. 3 ist ebenfalls in dem Behälter 37 ein Behälter 75 eingesetzt, der aber nicht, wie dies der Behälter 71 in Fig. 7, zeigt mit Durchgangslöchern 72 versehen ist. Der Behälter 75 stellt eine gewöhnliche Tasse dar, die beispielsweise zum Aufgießen eines Teebeutels oder eines Instamatic-Kaffees in den Behälter 37 des Teefilters 36 einsetzbar ist. Beide Behälter 71, 75 weisen an ihrem in den Fig. 3 und 7 oberen Rand 76 im Bereich der Aussparung 65 einen sich radial nach außen erstreckenden Handgriff 77 in Form einer Lasche auf, deren Oberseite 78 in genügend großem Abstand unterhalb der Oberkante 16 des Behälters 37 verläuft. Der Handgriff 77 ist über den Ausschnitt 68 von oben bzw. von der Seite leicht zugänglich.

Das Teesieb 71 verläuft vom Boden 73 in Fig. 7 nach oben konisch erweiternd, damit zum einen seine Herstellung aus Kunststoff einfach und das Herausnehmen der gequollenen Teeblätter leicht handhabbar ist. Die gleiche Gestalt weist auch die Tasse 75 auf, die jedoch in ihren radialen Abmessungen geringfügig kleiner ist als das Teesieb 71, damit sie im Bedarfsfall, wie Platzeinsparung, auch in das Teesieb 71 eingesetzt werden kann.

Die Wirkungsweise bzw. die Handhabung des erfindungsgemäßen Teefilters in der zugehörigen Kaffeemaschine ist folgende :

Wurde beispielsweise mit der Kaffeemaschine, wie sie in Fig. 2 dargestellt und wie sie bereits seit Jahren in großen Stückzahlen hergestellt wird, zuvor Kaffee gekocht, so wird, wenn man nun einen Tee oder Instamatic-Kaffee aufbrühen will, der Kaffeefilter 12 über das Drehgelenk 21 vom Gehäuse 2 durch leichtes Anheben und seitliches Verschieben herausgenommen und in umgekehrter Weise der Teefilter 36, wie er in den Fig. 3 bis 7 dargestellt ist, über das Drehgelenk 21 am Gehäuse 2 eingehängt. Zuvor wurde bereits in den Behälter 37 des Teefilters 36 das Teesieb 71 eingesetzt und mit Teeblättern gefüllt, will man Tee brühen.

Nun wird der Teefilter 36 in das Gehäuse 2 bis zu seiner Bereitschaftsstellung (Fig. 1) eingeschwenkt, wobei darauf geachtet werden muß, daß die Rippe 79 des Betätigungsknopfes auf ZU-Stellung steht (siehe Fig. 6), damit sichergestellt ist, daß das Ventil 18 den Auslaß 40 versperrt. Nach Füllen des Tanks 3 mit Wasser kann nun die als Teemaschine arbeitende Kaffeemaschine 1 durch Einschalten des mit den Durchlauferhitzer 5 verbundenen Schalters (nicht dargestellt) in Betrieb genommen werden.

Das aus dem Durchlauferhitzter 5 über die Heißwasserleitung 10 nach oben transportierte Wasser läuft über die Abgabeöffnung 11 in das Teesieb 71 ein. Wurde mehr Wasser im Tank 3 eingefüllt als der Behälter 37 aufnehmen kann, so läuft das überschüssige Brühgetränk über die Aussparung 65 in den Überlaufkanal 47 und von dort über den zweiten Kanalabschnitt 50 zur Abgabeöffnung 54, von wo es aus dem Teefilter 36 austritt und in die darunterstehende Kanne 27 einfließt.

Sobald die vorgegebene Brühzeit beendet ist, wird von Hand der Betätigungsknopf 16 entgegen dem Uhrzeigersinn gedreht, bis die Rippe 79 auf die AUF-Stellung zeigt. Das Ventil 18 ist nun geöffnet, und das aufgebrühte Brühgetränk fließt aus dem Behälter 37 über den Auslaß 40 und seitlich am Ventil 18 vorbei zur Abgabeöffnung 54. Durch diesen erfindungsgemäßen Teefilter 36 mit seinem Ventil 18 ist es möglich, die Brühzeit in einer vom Verbraucher gewünschten Zeit zu beschränken, damit nicht, wie es bei Tee bekannt, nach zu langer Brühzeit ungewollte Gerbstoffe aus dem Tee extrahiert werden.

Will beispielsweise ein Verbraucher einen Teebeutel oder einen Instamatic-Kaffee aufgießen, so braucht er nur in den Behälter 37 die in Fig. 3 dargestellte Tasse 75 mit einem darin befindlichen Teebeutel oder Instamatic-Kaffee einzusetzen und bei geschlossenem Ventil 18 Heißwasser über die Abgabeöffnung 11 einfließen zu lassen. Nach dem Ziehvorgang kann der Teefilter 36 aus dem Gehäuse 2 der Kaffeemaschine 1 herausgeschwenkt und der Behälter 75 entnommen werden. Der Teefilter 36 ist vorzugsweise aus durchsichtigem Kunststoff hergestellt. An seiner Vorderseite sind für die Füllstandshöhenangabe Markierungen 81 ausgebildet, wie diese in Fig. 6 dargestellt sind.

**Ansprüche**

1. Filtereinheit (36) zum Zubereiten von Tee, die abnehmbar am Gehäuse (2) einer Brühgetränkezubereitungsmaschine (1) und unterhalb einer heißes Wasser abgebenden ersten Abgabeöffnung (11) angeordnet ist, mit einem an ihrer Mantelfläche (46) angeordneten Überlaufkanal (47), der an seinem Eingang eine Öffnung (65) und an seinem Ausgang einem Endabschnitt (50) aufweist, und mit einem am Boden (38) der Filtereinheit (36) angeordneten Ventil (43), welches vom Endabschnitt (50) des Überlaufkanals (47) umgeben ist und durch dessen Öffnen das Brühgetränk über einen Auslaß (40) aus der Filtereinheit (36) in den Endabschnitt (50) des Überlaufkanals (47) abgelassen werden kann, aus dem es dann durch eine zweite Abgabeöffnung (54) in einen Auffangbehälter (20) abfließt, **dadurch gekennzeichnet, daß** am Endabschnitt (50) des Überlaufkanals (47) eine im wesentlichen quer zum Auslaß (40) verlaufende, weitere Öffnung (53) ausgebildet ist, die von einer Verstelleinheit (58) durchdrungen wird, mit der das Ventil (43) manuell geöffnet und geschlossen werden kann und an der Dichtelemente (51, 52) ausgebildet sind, die die Öffnung (53) nach außen hin abdichten.

2. Filtereinheit nach Anspruch 1, **dadurch gekennzeichnet, daß** das Ventil (43) einen zum Verschließen des Auslasses (40) geeigneten Ventilkörper (42) aufweist, der an einem sich an der Filtereinheit (36) abstützenden Federelement (57) befestigt ist, welches zum Schließen und Öffnen des Ventils von einem an der Verstelleinheit (58) ausgebildeten Exzenter (55, 56) betätigbar ist, wobei zur Betätigung des Federelements (57) der Exzenter (55, 56) über eine radial nach außen verlaufende Stange (59) mit einem an der Mantelfläche (46) der Filtereinheit (36) gelagerten Betätigungsknopf (60) verbunden ist.

3. Filtereinheit nach Anspruch 1, **dadurch gekennzeichnet, daß** in die Filtereinheit (36) ein zur ersten Abgabeöffnung (11) hin offener Behälter (71) einsetzbar ist, daß mindestens ein Teil der Wandung des Behälters (71) siebartig ausgebildet ist, daß der Behälter (71) mit einem radial nach außen hervorstehenden Handgriff (77) versehen ist, und daß die Öffnung (65) des Überlaufkanals (47) eine Aussparung aufweist, die bei eingesetztem Behälter (71) von dem Handgriff (77) durchdrungen wird.

4. Filtereinheit nach Anspruch 3, **dadurch gekennzeichnet, daß** die Dicke des Handgriffs (77) so auf die Tiefe der Aussparung abgestimmt ist, daß die Kontur an der Oberseite (16) der Filtereinheit (36) erhalten bleibt.

5. Filtereinheit nach Anspruch 3, **dadurch gekennzeichnet, daß** die Aussparung einen oder mehrere im wesentlichen längs zum Überlaufkanal (47) verlaufende Schlitze (80) aufweist.

**Claims**

1. A filter assembly (36) for preparing tea, which is detachably mounted on the housing (2) of an appliance for brewing beverages (1) below a first spout (11) delivering hot water, with an overflow channel (47) which is disposed on its peripheral surface (46) and has at its inlet an opening (65) and at its outlet an end section (50), and with a valve assembly (43) which is disposed at the bottom (38) of the filter assembly (36) and is surrounded by the end section (50) of the overflow channel (47), opening of the valve enabling the brewed beverage to be discharged from the filter assembly (36) through an outlet (40), the brew entering the end section (50) of the overflow channel (47) whence it subsequently flows through a second spout (54) into a beverage collection container (20), **characterized in that** a further opening (53) extending substantially transversely to the outlet (40) is provided on the end section (50) of the overflow channel (47), the further opening having an adjusting device (58) extending therethrough by means of which the valve assembly (43) can be opened and closed manually, the adjusting device being provided with sealing members (51, 52) for sealing the opening (53) relative to the outside.

2. A filter assembly as claimed in claim 1, **characterized in that** the valve assembly (43) includes a valve body (42) which is suited for closing the outlet (40) and is secured to a spring member (57) bearing against the filter assembly (36), the spring member being adapted to be actuated by an eccentric device (55, 56) provided on the adjusting device (58) for closing and opening of the valve, the eccentric device (55, 56) being connected via a radially outwardly extending rod (59) with a control knob (60) mounted on the peripheral surface (46) of the filter assembly (36) for actuation of the spring member (57).

3. A filter assembly as claimed in claim 1, **characterized in that** a holder (71) open in the direction of the first spout (11) is insertable in the filter assembly (36), that at least part of the wall of the holder (71) is configured in the manner of a strainer, that the holder (71) is provided with a radially outwardly protruding handle (77), and that the opening (65) of the overflow channel (47) includes a recess through which the handle (77) extends when the holder (71) is inserted.

4. A filter assembly as claimed in claim 3, **characterized in that** the thickness of the handle (77) is adapted to the depth of the recess such that the contour is maintained on the top edge (16) of the filter assembly (36).

5. A filter assembly as claimed in claim 3, **characterized in that** the recess includes one or several slots (80) extending substantially longitudinally to the overflow channel (47).

## Revendications

1. Unité de filtrage (36) pour la préparation de thé, qui est agencée de manière amovible sur le boîtier (2) d'une machine à préparer des boissons chaudes (1) et en dessous d'une première ouverture de sortie (11) débitant de l'eau chaude, qui comprend un canal de trop-plein (47), lequel est agencé sur sa surface d'enveloppe (46) et lequel présente à son entrée une ouverture (65) et à sa sortie une section d'extrémité (50), et qui comprend une soupape (43), laquelle est agencée sur le fond (38) de l'unité de filtrage (36), laquelle est entourée par la section d'extrémité (50) du canal de trop-plein (47) et par l'ouverture de laquelle la boisson chaude peut être évacuée dans la section d'extrémité (50) du canal de trop-plein (47) à partir de l'unité de filtrage (36) par une sortie (40), ladite boisson s'écoulant ensuite dans un récipient collecteur (20) par une deuxième ouverture de sortie (54), caractérisée en ce que à la section d'extrémité (50) du canal de trop-plein (47) est réalisée une autre ouverture (53), qui s'étend sensiblement transversalement par rapport à la sortie (40) et qui est pénétrée par un organe de réglage (58), par lequel la soupape (43) peut être ouverte et fermée manuellement et sur lequel des éléments d'étanchéité (51, 52) sont réalisés qui rendent l'ouverture (53) étanche vers l'extérieur.

2. Unité de filtrage suivant la revendication 1, caractérisée en ce que la soupape (43) présente pour fermer la sortie (40) un corps de soupape approprié (42), qui est fixé sur un élément élastique (57), lequel s'appuie sur l'unité de filtrage (36) et lequel, pour fermer et ouvrir la soupape, peut être actionné par un excentrique (55, 56) réalisé sur l'organe de réglage (58), l'excentrique (55, 56) étant relié, pour l'actionnement de l'élément élastique (57), à un bouton d'actionnement (60) supporté sur la surface d'enveloppe (46) de l'unité de filtrage (36) par l'intermédiaire d'une tige (59) s'étendant radialement vers l'extérieur.

3. Unité de filtrage suivant la revendication 1, caractérisée en ce qu'un récipient (71) ouvert vers la première ouverture de sortie (11) peut être introduit dans l'unité de filtrage (36), en ce qu'au moins une partie de la paroi du récipient (71) est réalisée en forme de tamis, en ce que le récipient (71) est pourvu d'une poignée (77) faisant saillie radialement vers l'extérieur et en ce que l'ouverture (65) du canal de trop-plein (47) présente un évidement, qui est pénétré par la poignée (77) lorsque le récipient (71) est introduit.

4. Unité de filtrage suivant la revendication 3, caractérisée en ce que l'épaisseur de la poignée (77) est adaptée à la profondeur de l'évidement de manière telle que le contour à la face supérieure (16) de l'unité de filtrage (36) reste maintenu.

5. Unité de filtrage suivant la revendication 3, caractérisée en ce que l'évidement présente une ou plusieurs fentes (80) s'étendant sensiblement le long du canal de trop-plein (47).

FIG.1

FIG.2

FIG.3

FIG.4

FIG.5

FIG.6

FIG.7